# EUROPEAN PATENT APPLICATION

(11) **EP 2 111 760 A1**
(43) Date of publication of application: **28.10.2009**
(21) Application number: 08007908.0
(22) Date of filing: 24.04.2008
(51) Int. Cl.: A23G 1/21, A23G 1/20, A23G 1/22, A23G 3/28, A23P 1/10, B30B 15/06

(54) **Cold-pressing tool for chocolate mass**

(71) Applicant: AASTED-MIKROVERK APS, 3520 Farum (DK)
(72) Inventor: Refer, Jacob Christian, 3100 Hornbaek (DK)

(57) **Abstract**

Apparatus (1) for cold-pressing of chocolate-like mass such as chocolate deposited into multiple cavities (5) in mould plates (4) comprising a holding device (2) carrying a suspended plunger (3) per cavity. The plungers (3) have at least one convex pressing surface (12) adapted to be immersed into the mass and create a shell-like part (13) of the article (15). Secondary pressing surfaces (14) are arranged being adapted to be essentially in level with or above the upper surface (10) of the mould plates (4) in the fully immersed position.

## Description

The present invention concerns apparatuses for cold-pressing of chocolate-like mass such as chocolate deposited into multiple cavities in mould plates comprising a holding device carrying one suspended plunger per cavity, which plungers have at least one convex pressing surface adapted to be immersed into the mass.

The introductory type of apparatuses is today widely known in the production of chocolate shells with the highest possible accuracy and chocolate quality. Many types of mass may apply as long as the mass is capable of being pressed into shape. Chocolate mass, whether it is in a highly liquid state or in a thick paste-like viscous state may apply. The chocolate mass may have a content of genuine cocoa butter or simply be a so-called chocolate-like mass by which the butter is substituted with other kinds of fats or oils such as palm-kernel oils. Decisive is, that the particular mass in question is deformable by the action of the cold plungers,

When for example shells are to be made liquid chocolate is deposited into each cavity and by lowering the holding device the plungers are simultaneously immersed into the chocolate in the different mould cavities. By the pressing action of the plungers the chocolate mass is pressed into shells having the desired shape. Due to the cooling of the plungers a forced solidification of the influenced chocolate is achieved. The chocolate mass then contracts slightly and releases the pressing surfaces of the plungers which may be lifted up and free from the cavities within seconds.

Generally, chocolate mass is suspensions of non-fat particles such as sugar, milk powders and cocoa solids mixed up with a liquid fat constituent. Often, the fat phase comprises genuine cocoa butter of until around 30% but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kemel oil. Mass made of 100% fat in the form of cocoa butter or the like as compound is also possible to use within the inventive idea. The chocolate mass is typically tempered or seeded to achieve a desired crystal type such as Beta5 in the mass before it is deposited into the cavities.

After the shells are moulded and have solidified, they may be filled with a centre mass of a creamy or liquid food material which typically differs from that of the shell itself. Finally a chocolate covering layer can also be deposited for closing off the centre mass, thereby creating a closed article.

A problem to solve is to provide articles with a combination of a shell-part and a solid part moulded up in one go so that the solid part constitutes a visible area for impressions, text, messages, pictures or the like which are not covered when the shell cavity is filled with centre-mass or the like.

The apparatus according to the present invention is characterised in, that further substantial pressing surfaces are arranged being adapted to be essentially in level with or above the upper surface of the mould plates in the fully immersed position. Hereby is achieved moulded chocolate articles with a combination of at least one cavity and a substantial outer surface having impressions or text or the like and which surface are not going to be covered by a filling mass or a centre mass or the like.

When the further substantial pressing surfaces are arranged on a separate part fixed to the plunger it is especially expedient to choose between such parts having different ornaments or text or pictures or the like to be moulded into the chocolate mass.

The further substantial pressing surfaces may also be arranged on a closure plate having openings through which the plungers extends, and which is movably suspended below the holding device.

The further substantial pressing surfaces can also be arranged in a central area between at least two convex pressing surfaces at the plunger. Then especially interesting and complex articles with more than just only cavity can be made in one pressing operation.

The invention is further described by referral to the drawing, in which
figure 1 schematically discloses an apparatus for cold-pressing of chocolate mass according to the invention, shown in the lower pressing and moulding position,
figure 2 the plunger of the apparatus of figure 1,
figure 3 the chocolate article moulded by the apparatus of figure 1, seen from above,
figure 4 the chocolate article of figure 3, seen from below, and
figure 5 discloses a second embodiment of an apparatus according to the invention.

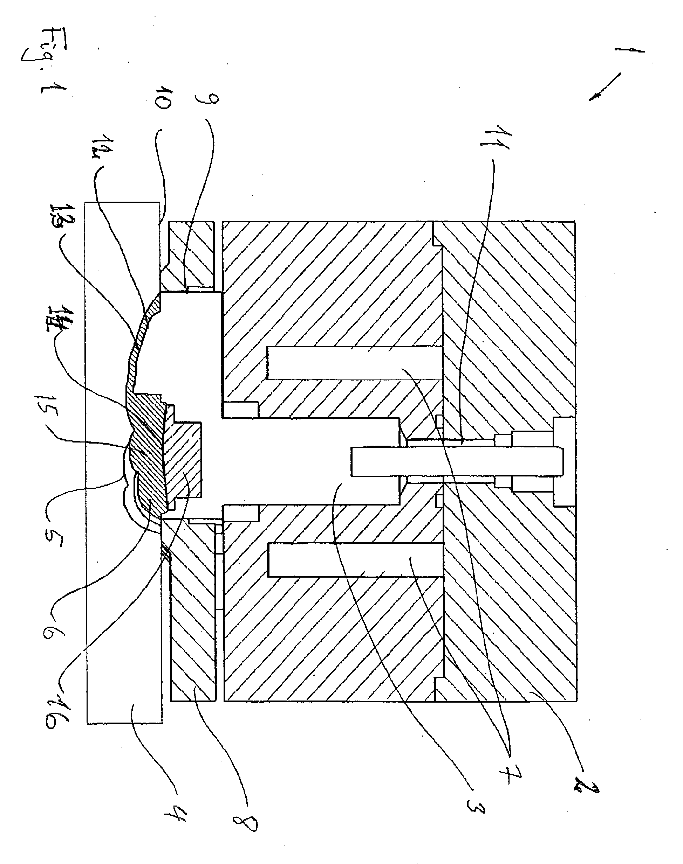

The apparatus 1 disclosed in figure 1 constitutes part of a major plant for moulding of chocolate articles. The apparatus is incorporated in a moulding station in the major plant and for the sake of clarity the support, lifting means for the holding plate as well as motor, gear means and all kinds of control and regulating means is left out from the drawing as it is not part of the inventive idea. Conveyor means for the mould plates are also left out for the sake of clarity.

The apparatus disclosed in figure 1 is shown in vertical section for sake of simplicity. The apparatus 1 comprises a holding device 2 carrying multiple plungers 3 of which only one is depicted. Under the holding device travels a continuous row of mould plates 4 of which only one is disclosed. In the mould plates are arranged multiple cavities 5 having the desired shape of the outer contour of the chocolate article 6 to be moulded.
During a production run with the apparatus 1 liquid or flow able chocolate mass is deposited into the cavities of the mould plates 4 and when a mould plate is aligned under the holding device 2 it is lowered so that the multiple plungers 3 are immersed down into the mass in the multiple corresponding cavities 5 in the mould plate 4.
The pressing can be performed in a synchronous movement of the holding device 2 along with the travel of the mould plates 4, or the pressing of the articles can be performed when the conveyor and the mould plates 4 are halted directly under the holding device 2.

Cooling refrigerant flows through channels 7 in the holding device 2 so that the plungers 3 are cooled to the desired cold-pressing temperature which are typically below 0 °C and advantageously between minus 5 °C and minus 25 °C.

A closure plate 8 having openings 9 through which the plungers 3 extends, and which is movably suspended below the holding device 2 is adapted to rest on top of the mould plates 4 and close off the moulding cavity 5 for the mass during immersion of the plungers 3 into the mass. As disclosed in figure 1 the closure plate 8 rests on the upper surface 10 of the mould plates 4.

The plungers 3 are suspended into the holding device 2 by means of some spring means 11 such as mechanical springs or air pressure, so that slight differences in the deposited amount of mass into the particular cavities 5 can be compensated by slight axial travel of the plunger 3 when the articles 6 are moulded into complete shape and filling out of the closed cavity between the mould cavity 5, the plunger 3 and the closure plate 8.

The plungers 3 have at least one convex pressing surface 12 adapted to be immersed into the mass and create a shell-part 13 of the article 6, which shell part 13 after the pressing shall be filled with any filling mass such as for example cream mass, nougat or the like.

According to the inventive idea further secondary pressing surfaces 14 are arranged on the plunger 3 being adapted to be essentially in level with or above the upper surface 10 of the mould plates 4 in the fully immersed position.
When lowering the holding device 2 the moulding sequence begins when the closure plate 8 has reached and closed on to the upper surface 10 of the mould plate 4. Then the plunger 3 travels further downwards as the convex pressing surfaces 12 rapidly presses the mass out into the part of the cavity 5 below and around the secondary pressing surfaces 14 so that the complete cavity is filled out with mass. Hereby is provided an article with a unique combination of at least one shell-like part 13 which are to be filled with some kind of centre mass and a secondary solid part 15 of the article which are not to be filled with centre mass. On top of the secondary solid part 15 the secondary pressing surfaces can typically press some kind of text or picture or logo or brand name etc. into the mass.

Especially advantageous is it then when the secondary pressing surfaces are arranged on a separate part 16 fixed to the plunger 3. The manufacturer can then typically have many separate parts 16 each having a different impression or logo or text etc so that articles with different looks can be moulded without changing the moulds and the plungers.

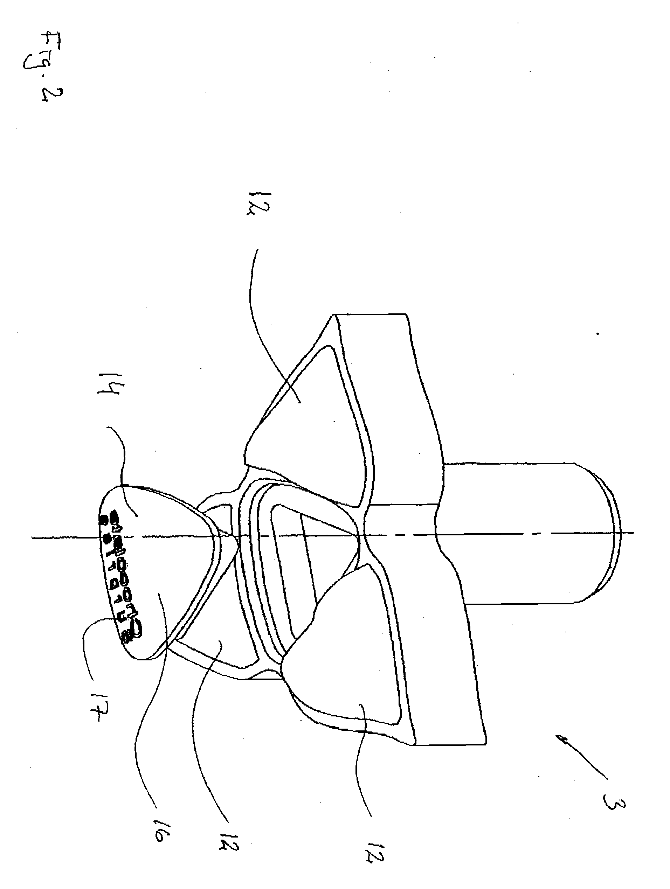

In figure 2 is disclosed the plunger 3 having three separate convex pressing surfaces 12 for moulding of three shell parts 13 in the same article. The contour of a mirrored text 17 to be impressed into the mass is disclosed on the secondary pressing surface 14 of the loosely fixed part 16.

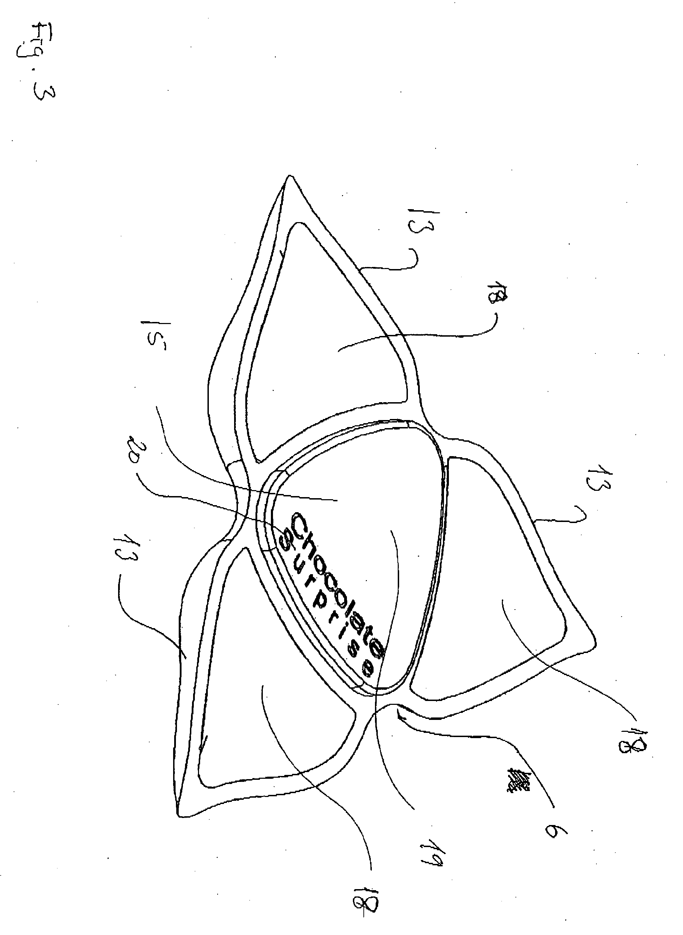

The chocolate article 6 moulded with the moulding tools of figure 1 and 2 is disclosed, seen from above in figure 3, as it is already removed from the mould plate 4. It can easily be seen the three shell-like parts has a cavity 18 which is to be filled with some kind of centre mass. The secondary part 15 having the substantial surface 19 being moulded by the secondary pressing surfaces 14 of the loosely fixed plunger part 16 is by the disclosed embodiment arranged in the centre of the article. The impressions 20 made by the contoured parts 17 of the separate part 16 is clear and impressive.

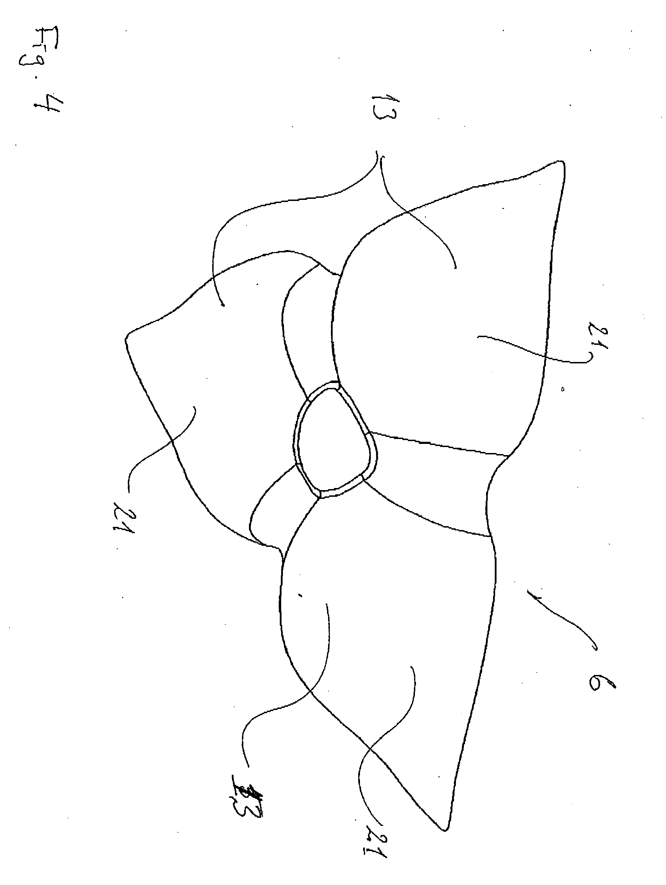

In figure 4 the article 6 is disclosed from below. The outer surfaces 21 of the shell-like parts 13 are created by the cavity 5 in the mould plate 4.

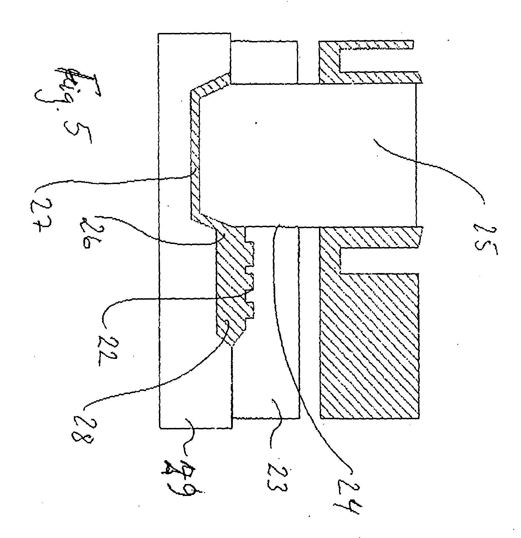

In figure 5 is disclosed another embodiment of the apparatus by which the secondary pressing surfaces 22 are arranged on a closure plate 23 having openings 24 through which the plungers 25 extends. The article 26 comprises the shell-like part 27 and the secondary part 28. This embodiment is especially expedient as the plunger becomes simple in its configuration as it is hen free from the secondary part with the secondary pressing surfaces. Instead it is very easy and simple to create the secondary pressing surfaces 22 in the closure plate 23. By this embodiment some of the geometry of the second part 28 of the article 26 is then provided in the mould plate 29 and some in the closure plate 23.

## Claims

1. Apparatus (1) for cold-pressing of chocolate-like mass such as chocolate deposited into multiple cavities (5) in mould plates (4) comprising a holding device (2) carrying a suspended plunger (3) per cavity, which plungers (3) have at least one convex pressing surface (12) adapted to be immersed into the mass and create a shell-like part (13) of the article (15),
**characterised in,**
**that** secondary pressing surfaces (14) are arranged being adapted to be essentially in level with or above the upper surface (10) of the mould plates (4) in the fully immersed position.

2. Apparatus according to claim 1, **characterised in, that** the further substantial pressing surfaces (14) are arranged on a separate part (16) fixed to the plunger (3).

3. Apparatus according to claim 1, **characterised in, that** a closure plate (8) having openings (9) through which the plungers (3) extends, and which is movably suspended below the holding device (2) is adapted to rest on top of the mould plates (4) and close off the moulding cavity (5) for the mass during immersion of the plungers (3) into the mass.

4. Apparatus according to claim 1, **characterised in, that** the further substantial pressing surfaces (22) are arranged on a closure plate (23) having openings (24) through which the plungers (25) extends, and which is movably suspended below the holding device.

5. Apparatus according to claim 1, **characterised in, that** the further substantial pressing surfaces are arranged in a central area between at least two convex pressing surfaces at the plunger.
